Europäisches Patentamt

**European Patent Office**

**Office européen des brevets**

(11) Numéro de publication: **0 281 441 B1**

(12) # FASCICULE DE BREVET EUROPEEN

(45) Date de publication de fascicule du brevet: **29.07.92** (51) Int. Cl.5: **A23C 19/08**

(21) Numéro de dépôt: **88400254.4**

(22) Date de dépôt: **03.02.88**

Le dossier contient des informations techniques présentées postérieurement au dépôt de la demande et ne figurant pas dans le présent fascicule.

(54) **Procédé de fabrication de fromages fondus à texture originale et fromage fondu obtenu par ce procédé.**

(30) Priorité: **13.02.87 FR 8701879**

(43) Date de publication de la demande:
**07.09.88 Bulletin 88/36**

(45) Mention de la délivrance du brevet:
**29.07.92 Bulletin 92/31**

(84) Etats contractants désignés:
**AT BE CH DE ES FR GB GR IT LI LU NL SE**

(56) Documents cités:
**DE-C- 3 314 551**
**FR-A- 2 165 202**
**US-A- 1 639 828**
**US-A- 1 898 992**

(73) Titulaire: **FROMAGERIES BEL**
**4, rue d'Anjou**
**F-75008 Paris(FR)**

(72) Inventeur: **Daurelles, Jacques**
**Montain**
**39210 Voiteur(FR)**
Inventeur: **Bernard, Jean-Yves**
**Marconay**
**39570 Lons le Saulnier(FR)**

(74) Mandataire: **Le Guen, Gérard et al**
**CABINET LAVOIX 2, place d'Estienne d'Orves**
**F-75441 Paris Cédex 09(FR)**

**EP 0 281 441 B1**

**Description**

La présente invention concerne le domaine alimentaire et plus particulièrement un procédé de fabrication de fromage fondu ou de spécialités fromagères fondues à texture originale.

D'une façon plus spécifique elle concerne la fabrication de fromage fondu ou de spécialités fromagères fondues dont l'aspect et la texture de la pâte sont proches de ceux d'un fromage obtenu par fabrication traditionnelle et qui présente des ouvertures dans la pâte. Elle concerne également la fabrication de fromages mixtes contenant des éléments distincts dans la pâte tels que des fromages naturels mais aussi des fromages ayant l'aspect d'une pâte molle ou d'une pâte pressée à croûte moisie. Elle concerne plus spécifiquement un procédé d'obtention de la texture élastique et souple, d'aspect mat et d'ouvertures caractéristique de ces fromages. Dans ces derniers, les ouvertures dites mécaniques sont dûes à des pratiques spécifiques au niveau du caillé qui retardent la soudure des grains; elles peuvent être complétées par des ouvertures de fermentation à l'aide de germes spécifiques (leuconostocs). On peut citer dans cette catégorie des fromages bien connus du public tels que les Pyrénées, le Camembert, le Brie.

Par fromage fondu ou spécialité fromagère fondue, on entend des produits issus de la fonte des fromages principalement à pâte pressée, éventuellement additionnés d'autres produits laitiers, tels que le lait en poudre, la crème, le beurre, la caséine, le lactosérum, des concentrés protéiques laitiers, éventuellement des concentrés aromatiques ou aromates ou même des protéines ou lipides d'origine végétale. La fonte est généralement obtenue par addition d'un agent technologique de fonte tel qu'un phosphate, polyphosphate ou un citrate de sodium à une concentration allant jusqu'à 3% en poids. Elle peut-être également obtenue par addition d'autres additifs technologiques (par exemple : des gommes tel que les gommes guar, caroube, xanthane, etc...) incorporés seuls ou en association avec les sels de fonte précités.

On peut également obtenir des fromages ou spécialités fondus par utilisation du procédé décrit dans le brevet FR-A-2 450 064.

D'une façon générale, ces fromages fondus ou spécialités fondues, qu'ils se présentent sous forme de blocs, de portions, de coupelles, de tranches, présentent une texture homogène compacte voire rigide et cassante, lisse, brillante et sans ouverture. A la connaissance de la Demanderesse, on n'a pas jusqu'à présent décrit ni commercialisé de fromages fondus ou spécialités fondues présentant une texture souple, élastique avec des ouvertures visibles à l'oeil nu.

On a toutefois décrit dans la littérature et commercialisé des fromages fondus ou spécialités fondues à texture spéciale, plus souple obtenue par une aération de la pâte par battage (moussage, fouettage) ou par incorporation d'un gaz approprié.

On peut ainsi citer FR-A-2 165 202 qui décrit un procédé d'obtention d'un fromage fondu moussé consistant à soumettre une pâte fromagère fondue à un battage à chaud sous un gaz inerte en présence de polyphosphates, la pâte présentant des caractéristiques spécifiques de viscosité qui permettent l'obtention d'un coefficient optimum de moussage.

On peut également citer EP-A-0 172 787 qui décrit un procédé pour la fabrication de fromage moussé dont l'originalité consiste, afin d'améliorer l'aptitude au moussage du produit et la stabilité de la mousse, à incorporer dans le mélange, dans des conditions déterminées, une solution d'albumine. La brevet allemand DE-C-3 114 551 décrit également la fabrication de tels produits avec incorporation de yaourt ou de produits laitiers fermentés similaires, produits qui selon l'inventeur confèrent au produit fini un pH relativement bas et une texture assez proche d'un fromage frais ou d'un "quark" allemand.

Malheureusement, les produits obtenus par ces différents procédés, s'ils aboutissent à un produit ayant une texture foisonnée et à une impression de légèreté "en bouche" gardent une texture homogène et d'aspect continu; en effet la structure foisonnée (présence de petites ouvertures) est peu visible à l'oeil nu. En aucun cas, ces technologies n'aboutissent à la fabrication de produits présentant des textures souples, élastiques avec des ouvertures similaires à celles des ouvertures mécaniques ou fermentairas présentes dans certaines pâtes fromagères (Brie, Camembert, Pyrénées).

On a par ailleurs décrit dans US-A-1 898 992 un procédé qui permettrait d'obtenir un fromage présentant des ouvertures visibles à l'oeil nu par introduction d'un gaz ou de particules solides de $CO_2$ dans une pâte à l'état plastique.

Or, d'une façon tout à fait inattendue, la Demanderesse a découvert qu'en faisant subir à une pâte fromagère fondue un foisonnement à chaud suivi d un défoisonnement partiel à chaud, on pouvait conférer à la pâte fromagère fondue une texture souple, élastique avec la présence d'ouvertures similaires aux ouvertures mécaniques traditionnelles des fromages.

La présente invention a ainsi pour objet un procédé de fabrication d'un fromage fondu ou d'une spécialité fromagère fondue à texture originale souple, proche de celles des fromages traditionnels et présentant des ouvertures dans la pâte visibles à l'oeil nu, caractérisé en ce que l'on soumet une pâte

2

fromagère fondue à un battage à chaud sous un gaz inerte de façon à obtenir un foisonnement de la pâte fromagère, puis on soumet la pâte fromagère foisonnée ainsi obtenu à un défoisonnement partiel à chaud et l'on refroidit rapidement le produit obtenu.

La présente invention a également pour objet les produits obtenus par ce procédé.

La présente invention permet ainsi de conférer à des pâtes traditionnelles de fromages fondus ou spécialités fondues un aspect de pâte de fromage traditionnel en créant dans la pâte des ouvertures visibles à l'oeil nu (ayant généralement une dimension d'au moins 0,5 mm).

Grâce à la présente invention, il est possible d'obtenir de nouveaux produits à aspect très attractif pour le consommateur et d'étendre la gamme des produits appartenant à la famille des fromages fondus ou des spécialités fondues. En outre, le procédé mis au point par la Demanderesse est de réalisation simple et facilement industrialisable. En particulier il permet une fabrication en continu de fromages fondus. Pour la réalisation de ce procédé, la Demanderesse a fait appel aux techniques traditionnelles de foisonnement. Un autre avantage de l'invention est l'obtention de produits de conservation plus longue que les fromages naturels correspondants avec des qualités organo-leptiques stables".

Dans la présente invention on part d'une pâte fromagère fondue. Cette pâte fromagère fondue peut être préparée selon les procédés utilisés traditionnellement en fonte de fromage et largement décrits dans la littérature (on peut citer ainsi le chapitre "fromages fondus" du livre de ECK / Le Fromage - Paris, Lavoisier, 1986). Il est bien entendu qu'on pourra employer comme matière première toutes les matières premières habituellement utilisées pour la fabrication du fromages fondus (fromages à pâte molle, à pâte pressée, caillé frais, poudre de lait, matière grasse, butyriques, protéines laitières concentrés d'ultrafiltration, etc).

On ajoute généralement à ces matières premières un agent technologique de fonte et l'on chauffe sous agitation généralement à une température de 70 à 150°C pour obtenir une pâte fromagère fondue. La pâte fondue obtenue a de préférence un extrait sec compris entre 35 et 60% une teneur en matière grasse de 5 à 40% et une teneur en matière azotée soluble de 1,5 à 4%.

On soumet alors la pâte fromagère fondue à un battage à chaud sous un gaz inerte tel que l'azote. Cette opération de battage est effectuée avantageusement à une température de 70 à 95°C, de préférence de 75 à 85°C.

C'est sous ces conditions de températures que le foisonnement souhaité est optimal et que le moussage se réalise le mieux du fait de l'état relativement fluide de la masse fondue, car, une température plus basse entraîne une viscosité du produit trop élevée pour effectuer une bonne dispersion du gaz et obtenir un foisonnement satisfaisant et une température plus élevée confère au produit une texture trop fluide qui ne permet pas de retenir suffisamment le gaz incorporé, le but du battage étant en effet d'obtenir un foisonnement suffisamment instable pour pouvoir défoisonner ensuite.

Le battage est avantageusement effectué sous une pression de 2 à 5.10$^5$ Pa de façon à permettre une incorporation assez importante du gaz tout en fournissant une mousse suffisamment instable pour subir ensuite un défoisonnement.

Lors du battage on incorpore avantageusement le gaz inerte, tel que l'azote, en une proportion telle que la densité relative du produit obtenu soit de 0,7 à 0,8 (par densité relative on désigne le rapport de la densité du produit obtenu à celle du produit non foisonné ayant la même composition).

Le foisonnement peut s'effectuer dans n'importe quel type d'appareil industriel conçu à cet effet. On peut citer à titre d'exemples les appareils Mondomix et Burdosa. Dans le cas de l'appareil Mondomix, les conditions de foisonnement sont les suivantes:
- vitesse de battage : 150 à 400 t/min
- pression d'incorporation du gaz : 3 à 4.10$^5$ Pa.

On laisse ensuite la pâte fromagère foisonnée subir un défoisonnement partiel. Ce défoisonnement partiel est effectué avantageusement jusqu'à une densité relative de 0,8 à 0,9.

A cet effet la pâte fromagère fondue foisonnée peut être transférée directement dans une cuve ou une trémie où elle va séjourner le temps nécessaire à un défoisonnement partiel; la durée de défoisonnement est choisie en fonction du type d'ouvertures que l'on veut obtenir. Le défoisonnement du produit s'effectue avantageusement à une température de 70 à 95°C et de préférence aux environs de 80°C-90°C, cette zone de température permettant la maîtrise de la vitesse de défoisonnement; en effet une température trop élevée entraîne un défoisonnement trop rapide, voir total, une température trop basse un défoisonnement trop lent, voir nul. La durée de défoisonnement est avantageusement comprise entre 2-3 minutes pour l'obtention d'ouvertures ayant une taille de 0,5 mm à 5 minutes pour des ouvertures de 2 à 5 mm de longeur.

On peut également régler l'intensité du défoisonnement en agissant sur l'agitation mécanique en cuves ou en trémies; l'intensité de cette agitation doit être faible afin d'éviter un défoisonnement trop rapide et l'apparition d'ouvertures de taille non souhaitée.

Une autre possibilité consiste à conditionner à chaud la pâte fromagère foisonnée, par exemple à une température de 85 à 90°C, puis à placer le produit foisonné conditionné dans une enceinte ayant une température d'environ 80-120°C pendant 15 à 60 minutes. La température et le temps étant fonction du format du fromage. Ce procédé est utilisé avantageusement pour la fabrication de fromages composites car il permet une thermisation du produit.

En l'absence d'un tel conditionnement préalable, le produit après défoisonnement, ayant acquis la texture et la taille souhaitées pour les ouvertures, est alors conditionné en coupelles, portions d'aluminium. blocs destinés à la coupe ou tout autre format et conditionnement appropriés. Il est évident que la forme du produit fini n'est pas limitée et qu'elle peut être cylindrique, cubique, triangulaire, conique, sphérique, parallépipédique, ovoide, etc...

On soumet ensuite le produit conditionnné à un refroidissement rapide à une température inférieure ou égale à 20°C afin de figer l'édifice; le temps et la température de l'enceinte de refroidissement sont choisis en fonction du format du produit; ainsi un bloc de 1,5 kg peut être placé à 6°C pour atteindre 20°C à coeur après environ 8h alors qu'une pièce de 200 g atteindra 20°C à coeur après environ 2h à6°C.

Le produit peut être nature ou aromatisé avec des aromates traditionnels (poivre, cumin, oignons, etc ...), des concentrés aromatiques (tomates, poivrons, fromages, crustacés, etc) ou tout autre substance aromatique connue et utilisée dans ces fabrications.

Des exemples particulièrement avantageux consistent à incorporer dans les matières premières de fonte un fromage typé en goût (fromages à pâte persillée par exemple) ou à fabriquer un fromage mixte en incorporant dans la masse fondue partiellement foisonnée obtenue des morceaux ou des tranches de fromage naturel particulièrement attractif (fromage à pâte persillée, mimolette) afin d'obtenir un fromage particulièrement attractif et original pour le consommateur.

Un autre mode de réalisation particulièrement avantageux consiste à soumettre le produit avant conditionnement mais après refroidissement, à un ensemencement de la surface avec des microorganismes d'affinage et à laisser se développer dans des conditions précises de température et d'hygrométrie les microorganismes de façon à obtenir une fleur superficielle semblable à celle existant sur les fromages traditionnels dits à croûte moisie ou à croûte lavée.

Dans la mise en oeuvre de ce procédé on peut utiliser avantageusement la technique décrite dans EP-A-0 133 402 qui consiste essentiellement à effectuer préalablement à l'ensemencement un traitement d'acidification, notamment à un pH de 4 à 5. En outre selon cette technique les constituants de la base fromagère sont choisis avantageusement de façon que la pâte fromagère fondue ait une composition et un état proches de ceux d'un coagulum destiné à être transformé en fromage selon les techniques traditionnelles.

Par la mise en oeuvre de ce procédé simple, on obtient finalement dos fromages fondus ou des spécialisés fondues à texture souple, élastique et présentant des ouvertures similaires à celles présentées par des fromages naturels avec une durée de conservation beaucoup plus longue que ces derniers et une parfaite stabilité des qualités organo-leptiques.

Les exemples suivants illustrent le procédé selon l'invention.

## Example 1

On prépare un mélange de Cheddar, fromage des Pyrénées, caséine, lait, beurre, sel de cuisine et de sels de fonte selon les proportions suivantes :

| | |
|---|---|
| - Cheddar | 48% en poids |
| - Fromage des Pyrénées | 15% en poids |
| - Caséine | 2% en poids |
| - Lait écrémé | 2% en poids |
| - Beurre | 10% en poids |
| - Na Cl | 1% en poids |
| - Sels de fonte | 2% en poids |
| - Eau | complement à 100% |

de façon à obtenir après fusion à 110°C un mélange dont la teneur en extrait sec, matière grasse, matière azotée totale et matière azotée soluble est la suivante :

| | |
|---|---|
| - Matière grasse | 50% (ES) |
| - Extrait sec | 53% |
| - Matière azotée totale | 18% |
| - Matière azotée soluble | 3% |

La composition obtenue est celle d'une pâte pressée genre fromage des Pyrénées.

On fait fondre l'ensemble à 110°C pendant 3 minutes environ dans un cutter. On refroidit à 85°C et on foisonne en continu la masse obtenue dans un foisonneur de marque Mondomix sous une pression d'azote de $3.10^5$ Pa, avec une vitesse du rotor de 400 t/min. On obtient un produit foisonné ayant une densité relative de 0,75. On transfère le produit foisonné dans une cuve sous faible agitation (5 t/m) pendant 3 minutes. On obtient un produit partiellement défoisonné ayant une densité relative de 0,8. On coule ensuite le mélange chaud dans des moules. On refroidit rapidement dans une enceinte à 2°C (2h à 6h) de façon à atteindre une température de 8 à 12°C. On obtient un produit fromager ayant des ouvertures d'environ 0,5 mm.

On démoule alors les produits et on dépose à la surfaceun produit plastifiant ou une cire d'enrobage. Le produit a l'aspect d une pâte pressée et présente une coupe avec de nombreuses petites ouvertures visibles de 0,5 mm environ, bien réparties. La conversation de ce produit est de 6 mois.

Exemple 2

On réalise un mélange ayant la composition suivante :

| | |
|---|---|
| - Cheddar | 24% en poids |
| - Pâte molle (Brie - Camenbert) | 20% en poids |
| - Crème | 26% en poids |
| - Caséinate | 6,6% en poids |
| - Na Cl | 1% en poids |
| - Gomme xanthane | 0,2% en poids |
| - Gomme Caroube | 0,2% en poids |
| - Eau | Complément à 100% |

de façon à obtenir un mélange dont l'extrait sec et la matière grasse sont ceux d une pâte molle riche en graisse à savoir :

| | |
|---|---|
| - Extrait sec | 50% |
| - Matière grasse/ES | 60% en poids |
| - Matière azotée totale | 14% |
| - Matière azotée soluble | 2% |

On chauffe le tout à 80°C pendant deux minutes dans un cutter. Le pH est de 5,3. On foisonne en continu la pâte fondue dans un foisonneur Mondomix sous une pression d'azote de $4.10^5$ Pa, avec une vitesse de rotor de 200 t/min de façon à obtenir un produit foisonné ayant une densité relative de 0,7. Le produit est alors réchauffé à 90°C dans un échangeur à surface raclée sous faible agitation.

On coule le mélange chaud après un séjour en trémie de 5 minutes à 90°C, séjour au cours duquel se produit un défoisonnement partiel. Le produit partiellement ainsi défoisonné a une densité relative de 0,9. On refroidit rapidemment (2h) le produit dans une enceinte à 40°C puis. 6h à 48h dans une enceinte à 6°C. Le produit refroidi obtenu a des ouvertures de 2 à 4 mm de longueur.

Après démoulage, on pulvérise sur les faces extérieure du fromage une suspension de ferment lactiques à 2%, on laisse acidifier pendant 2 à 6 heures jusqu'à atteindre un pH de 4,6 en surface. On pulvérise alors une suspension de Pénicillium Candidum ayant une concentration en spores de $10^5$ à $10^7$ spores/ml.

Les fromages sont alors affinés pendant huit jours en les soumettant à des soins en cave. Conditionnés, les fromages sont prêts à la vente. Le développement du Pénicillium donne un aspect de croûte moisie, la présence d'ouvertures allongées et irrégulières (2 mm à 4 mm) confère à un aspect de fromages traditionnels de type pâte molle.

Exemple 3

On utilise une masse fondue crémeuse proche de l'exemple n° 2 dans lequel on a remplacé les pâtes molles par une pâte persillée et les gommes par des sels de fonte.

On foisonne la pâte fondue à une température de 80°C dans un foisonneur Mondomix sous une pression d'azote de 2,5 $10^5$ Pa avec une agitation faible (200 à 300 t/min). On obtient un produit foisonné ayant une densité relative de 0,75. On moule ce produit et on dispose successivement entre les couches de fromage fondu des tranches de fromage à pâte persillée préalablement découpées et écroûtées (ce fromage a été obtenu à partir d'un lait pasteurisé et a un extrait sec de 50% en poids).

Les moules remplis sont fermés. On les dispose alors dans un four de manière à maintenir les fromages à une température de 80°C pendant 15 minutes à 1 heure; au cours de cette thermisation s'effectue le défoisonnement. Les fromages sont alors refroidis rapidement à 6°C.

Le lendemain, les fromages sont démoulés, soumis à un traitement de surface similaire à celui de l'exemple 2. On pulvérise ensuite une suspension de Pénicillium Candidum. Les fromages sont alors affinés suivant une technologie pâte molle.

Les ouvertures réparties dans l'ensemble de la masse, la présence du Pénicillium de surface confèrent au produit une texture souple et onctueuse et un aspect de fromage à croûte moisie.

**Revendications**

1. Procédé de fabrication d un fromage fondu ou d'une spécialité fromagère fondue à texture originale souple, proche de celle, des, fromages traditionnels et présentant des ouvertures d'un diamètre d'au moins 0,5 mm dans la pâte, caractérisé en ce que l'on soumet un pâte fromagère fondue à un battage à chaud sous un gaz inerte de façon à obtenir un foisonnement instable de la pâte fromagère, puis on soumet la pâte fromagère foisonnée ainsi obtenue à un défoisonnement partiel à chaud et l'on refroidit rapidement le produit obtenu.

2. Procédé selon la revendication 1, caractérisé en ce que l'on effectue le battage à une température de 70 à 95°C.

3. Procédé selon la revendication 2, caractérisé en ce que l'on effectue le battage à une température de 75 à 85°C.

4. Procédé selon l'une quelconque des revendications 1 à 3, caractérisé en ce que l'on effectue le battage sur une pression de 2 à 5.$10^5$ Pa.

5. Procédé selon l'une quelconque des revendications 1 à 4, caractérisé en ce que l'on incorpore pendant le battage une proportion de gaz interte telle que la densité relative du produit foisonné soit de 0,7 à 0,8.

6. Procédé selon l'une quelconque des revendications 1 à 5, caractérisé en ce que le défoisonnement est effectué jusqu'à l'obtention d'une densité de 0,8 à 0,9.

7. Procédé selon l'une quelconque des revendications 1 à 6, caractérisé en ce que l'on effectue le défoisonnement en laissant la pâte fromagère foisonnée à une température de 70 à 95°C.

8. Procédé selon la revendication 7, caractérisé en ce que l'on effectue le défoisonnement à une température de 80 à 90°C.

9. Procédé selon la revendication 7, caractérisé en ce que la durée du défoisonnement est de 2 à 5 minutes.

10. Procédé selon l'une quelconque des revendications 7 à 9, caractérisé en ce que l'on effectue le défoisonnement sous faible agitation.

11. Procédé selon l une quelconque des revendication 1 à 6, caractérisé en ce que l'on conditionne la pâte fromagère foisonnée à chaud, puis l'on procède au défoisonnement partiel par maintien de la composition conditionnée dans une enceinte à une température de 80 à 120°C pendant 15 à 60

EP 0 281 441 B1

minutes.

12. Procédé selon l'une quelconque des revendications 1 à 11, caractérisé en ce que l'on refroidit rapidement le produit partiellement défoisonné à une température inférieure ou égale à 20°C pendant au moins 1 heure.

**Claims**

1. Process for the manufacture of a processed cheese or of a processed cheese speciality with an original, supple texture similar to that of traditional cheeses and having holes with a diameter of less than 0.5 mm in the mixture, characterised in that a processed cheese mixture is beaten while still hot under an inert gas so as to obtain an unstable swell in volume of the cheese mixture, then the expanded cheese mixture so obtained is subjected to a partial reduction in volume while still hot and then the product obtained is cooled down rapidly.

2. Process according to claim 1, characterised in that the beating is effected at a temperature between 70 and 95°C.

3. Process according to claim 2, characterised in that the beating is effected at a temperature between 75 and 85°C.

4. Process according to one of claims 1 to 3, characterised in that the beating is effected under a pressure of 2 to 5 x $10^5$ Pa.

5. Process according to one of claims 1 to 4, characterised in that during the beating a proportion of inert gas is incorporated such that the relative density of the expanded product is 0.7 to 0.8.

6. Process according to one of claims 1 to 5, characterised in that the reduction in volume is carried out until a density of 0.8 to 0.9 is obtained.

7. Process according to one of claims 1 to 6, characterised in that the reduction in volume is effected by leaving the expanded cheese mixture at a temperature between 70 to 95°C.

8. Process according to claim 7, characterised in that the reduction in volume is effected at a temperature between 80 and 90°C.

9. Process according to claim 7, characterised in that the duration of the reduction in volume is from 2 to 5 minutes.

10. Process according to one of claims 7 to 9, characterised in that the reduction in volume is effected with gentle agitation.

11. Process according to one of claims 1 to 6, characterised in that the expanded cheese mixture is packed while still hot, followed by a procedure for its partial reduction in volume by maintaining the packaged composition in a chamber at a temperature between 80 and 120°C for 15 to 60 minutes.

12. Process according to one of claims 1 to 11, characterised in that the product partially reduced in volume is rapidly cooled down to a temperature equal to or lower than 20°C for at least 1 hour.

**Patentansprüche**

1. Verfahren zur Herstellung von Schmelzkäse oder einer Schmelzkäse-Spezialität mit weichem Originalgefüge, ähnlich dem üblicher Käse und mit Öffnungen mit einem Durchmesser von mindestens 0,5 mm in der Masse, **dadurch gekennzeichnet,** daß man eine geschmolzene Käsemasse in der Wärme unter einem inerten Gas so schlägt, daß eine instabile Aufquellung der Käsemasse erhalten wird, worauf man die so erhaltene aufgequollene Käsemasse in der Wärme einer teilweisen Entquellung unterzieht und das erhaltene Produkt rasch abkühlt.

7

**2.** Verfahren nach Anspruch 1, dadurch gekennzeichnet, daß man das Schlagen bei einer Temperatur von 70 bis 95°C durchführt.

**3.** Verfahren nach Anspruch 2, dadurch gekennzeichnet, daß man das Schlagen bei einer Temperatur von 75 bis 85°C durchführt.

**4.** Verfahren nach einem der Ansprüche 1 bis 3, dadurch gekennzeichnet, daß man das Schlagen bei einem Druck von 2 bis $5.10^5$ Pa durchführt.

**5.** Verfahren nach einem der Ansprüche 1 bis 4, dadurch gekennzeichnet, daß man während des Schlagens einen derartigen Anteil an inertem Gas einarbeitet, daß die relative Dichte des aufgequollenen Produkts 0,7 bis 0,8 beträgt.

**6.** Verfahren nach einem der Ansprüche 1 bis 5, dadurch gekennzeichnet, daß das Entquellen bis zur Erzielung einer Dichte von 0,8 bis 0,9 durchgeführt wird.

**7.** Verfahren nach einem der Ansprüche 1 bis 6, dadurch gekennzeichnet, daß man das Entquellen durch Belassen der aufgequollenen Käsemasse bei einer Temperatur von 70 bis 95°C durchführt.

**8.** Verfahren nach Anspruch 7, dadurch gekennzeichnet, daß man das Entquellen bei einer Temperatur von 80 bis 90°C durchführt.

**9.** Verfahren nach Anspruch 7, dadurch gekennzeichnet, daß die Dauer des Entquellens 2 bis 5 Minuten beträgt.

**10.** Verfahren nach einem der Ansprüche 7 bis 9, dadurch gekennzeichnet, daß man das Entquellen unter leichtem Bewegen durchführt.

**11.** Verfahren nach einem der Ansprüche 1 bis 6, dadurch gekennzeichnet, daß man die aufgequollene Käsemasse in der Wärme konditioniert und anschließend eine teilweise Entquellung durchführt durch Halten der konditionierten Zusammensetzung in einer Umgebung mit einer Temperatur von 80 bis 120°C während 15 bis 60 Minuten.

**12.** Verfahren nach einem der Ansprüche 1 bis 11, dadurch gekennzeichnet, daß man das teilweise entquollene Produkt rasch auf eine Temperatur unter oder gleich 20°C während mindestens einer Stunde abkühlt.